# EUROPEAN PATENT APPLICATION

(11) **EP 4 386 322 A2**
(43) Date of publication of application: **19.06.2024**
(21) Application number: 23205334.8
(22) Date of filing: 23.10.2023
(51) Int. Cl.: G01C 21/32

(54) **TESSELLATION-BASED PROXIMITY SYSTEM**

(30) Priority: 24.10.2022 US 202217972368
(71) Applicant: Expedia, Inc., Seattle, Washington 98119 (US)
(72) Inventor: Goussard, Jacques-Olivier, H2Y 1V7 Montreal (CA); Kanoute, Mahamane, H2Y 1V7 Montreal (CA); Hacot, Herve, H2Y 1V7 Montreal (CA); Miglietti, Jean-Louis, H2Y 1V7 Montreal (CA); Fouquereau, Guillaume, H2Y 1V7 Montreal (CA)
(74) Representative: Marks & Clerk LLP

(57) **Abstract**

A method includes storing, in computer memory, a tessellation comprising a plurality of tiles corresponding to a plurality of geographical regions. The plurality of tiles are stored with travel times in a plurality of transportation modalities across a plurality of edges of the plurality of tiles. The method also includes storing, in the computer memory, associations between a plurality of points of interest and corresponding tiles of the plurality of tiles based on locations of the plurality of points of interests relative to the plurality of geographic regions, determining, by one or more processors, a first set of the plurality of tiles reachable from a first tile of the plurality of tiles in up to a first total travel time based on the travel times across the plurality of edges, and identifying, by the one or more processors, a first set of the plurality of points of interest associated with the first set of the plurality of tiles.

## Description

### BACKGROUND

The present disclosure relates generally to mapping and routing technologies. Embodiments of the present disclosure also relate to finding proximity between points of interest, such as hotels, property rentals, attractions, restaurants, etc. in a manner which realistically reflects reachability and travel time in one or more modes of transportation. Conventional mapping and routing finding programs are generally adapted to calculate detailed routes (e.g., turn-by-turn directions) between two selected locations, but such calculations may be too computationally-expensive, too slow, etc. to enable efficiently assessing proximity with respect to many points of interest, for example. Accordingly, improvements in mapping and routing technologies which reduce computational complexity (and thus computer runtime, required processing power, etc.) while enabling efficient generation of proximity-based results are desirable. Such improvements are described in detail below.

### SUMMARY

One implementation of the present disclosure is a method. The method includes storing, in computer memory, a tessellation comprising a plurality of tiles corresponding to a plurality of geographical regions. The plurality of tiles are stored with travel times in a plurality of transportation modalities across a plurality of edges of the plurality of tiles. The method also includes storing, in the computer memory, associations between a plurality of points of interest and corresponding tiles of the plurality of tiles based on locations of the plurality of points of interests relative to the plurality of geographic regions, determining, by one or more processors, a first set of the plurality of tiles reachable from a first tile of the plurality of tiles in up to a first total travel time based on the travel times across the plurality of edges, and identifying, by the one or more processors, a first set of the plurality of points of interest associated with the first set of the plurality of tiles.

This summary is illustrative only and is not intended to be in any way limiting.

### BRIEF DESCRIPTION OF THE FIGURES

The disclosure will become more fully understood from the following detailed description, taken in conjunction with the accompanying figures, wherein like reference numerals refer to like elements, in which:
FIG. 1 is a block diagram of a system, according to some embodiments.
FIG. 2 is a flowchart of a process for generating a tessellation with associations to points of interest, according to some embodiments.
FIG. 3 is an illustration of a tessellation overlaid on a street-level map, according to some embodiments.
FIG. 4 is an illustration of an example tile of a tessellation, according to some embodiments.
FIG. 5 is a flowchart of a process for using a tessellation to identify points of interest within a maximum travel time from a selected starting point, according to some embodiments.
FIG. 6 is an illustration of a chain of tiles of a tessellation combined to form a route between two points or tiles, according to some embodiments.
FIG. 7 is an illustration of an isochrone generated using a tessellation, according to some embodiments.
FIG. 8 is an illustration of experimental results comparing efficiency of calculating an isochrone using a tessellation as compared to using conventional turn-by-turn route finding, according to some embodiments.
FIG. 9 is an illustration of experimental results comparing efficiency of calculating an isochrone for different tile sizes for tessellations, according to some embodiments.
FIG. 10 is an illustration of a process for identifying points of interest in a region of overlapping isochrones associated with two starting points, according to some embodiments.
FIG. 11 is an illustration of a view in a graphical user interface that can be generated along with the process of FIG. 10, according to some embodiments.
FIG. 12 is a flowchart of a process for estimating travel time to a destination in one or more travel modalities, according to some embodiments.
FIG. 13 is an example view in a graphical user interface showing a tessellation-based route estimation, according to some embodiments.
FIG. 14 is a flowchart of a process for providing tessellation-based proximity services locally on a user device, according to some embodiments.

### DETAILED DESCRIPTION

Referring generally to the figures, aspects of the present application relate to presenting users of travel sites and applications realistic proximity information and presenting point of interest (proximity information in a meaningful, efficient manner. Points of interest may include touristic points of interest such as accommodations (e.g., hotels, vacation rentals, apartments, etc.), travel hubs (e.g., train stations, airports, bus stations), attractions (e.g., museums, theaters, stadiums, event venues, parks, monuments), activities (e.g., tours, shopping, trailheads, fitness centers, restaurants, bars, cafes), etc., and any other identifiable entity with a geographic location (e.g., associated latitude and longitude). Such travel sites handle large numbers of searches and users expect results to be presented immediately. Desired outcomes include informing users of how long the user would need to travel to reach various points of interest from a select accommodation or other location and/or identify a set of accommodations (e.g., hotels) or other points of interest within one or more selected travel times from one or more selected points of interest.

Conventional mapping programs calculate detailed routes between two selected points, in contrast to handling sets of proximity information. As one example, if a user wishes to identify the set of restaurants within a 10 minute walk of the user's hotel or current location using a conventional mapping program, the user would need to use the mapping program to calculate detailed directions to a large number of restaurants and manually determine, based on the directions, the set of restaurants that meet the user's time-of-travel limit. Such an approach is computationally expensive, requiring calculation of numerous sets of detailed directions, including detailed directions to points of interest that ultimately will not meet the desired proximity (i.e., in order to determine that such points of interest are too far away). Due to such computational complexity, such conventional route-finding approaches may not be suitable for use at scale in generating sets of proximity-related results (e.g., in the context of applications and webpages for travel booking).

Another approach to providing proximity information may be to use raw, straight-line distances between points of interest. However, such information is often misleading due to street layouts, waterways, and other geographic features. For example, points of interest of different islands or opposite sides of a river may be relatively close in straight-line distance but separated by long travel times or are practically unreachable if bridges, etc. are not present. As another example, use of basic straight-line distance information may fail to suggest connections between points of interest which are relatively far apart in distance but directly connected by public transit or high-speed roadway (and thus relatively quickly reachable).

Addressing such challenges, aspects of the present disclosure relate to approaches which provide point of interest proximity information driven by realistic estimates of travel times generated in a computationally-efficient manner. As will be apparent from the following description, embodiments herein determine geographic areas reachable in certain amounts of time by different transportation modalities while abstaining from calculating detailed turn-by-turn directions, thereby saving computation time and processing demand. Points of interests in areas reachable in desired amounts of time using various transportation modalities can be identified in sets in an efficient manner.

Such approaches technologically enable deployment of programs, applications, websites, etc. which can provide such proximity information to users substantially immediately (e.g., order of milliseconds) in response to user inputs, search queries, etc. In this regards, the teachings herein provide reduce computation complexity which allows the calculations to be performed more quickly and, in some embodiments, locally on edge devices (e.g., smartphones) as opposed to only in more powerful server farms (e.g., in the cloud). The features herein thereby provide reduced power consumption for executing such processing (reducing in less battery drain when executed on smartphones and less overall energy footprint, emissions footprint, etc. associated with providing the features herein) while also providing lower latency results (e.g., less wait time for users of the systems and methods described herein). Such advantages enable scalability of the systems and methods described herein, for example to provide results to any arbitrary number of simultaneous users submitting parallel requests via a travel booking site or application as described herein. As explained in detail below, such efficiency savings can be adapted according to desires for higher accuracy information as desired in different scenarios. These and other technical advantages will be apparent from the following detailed description.

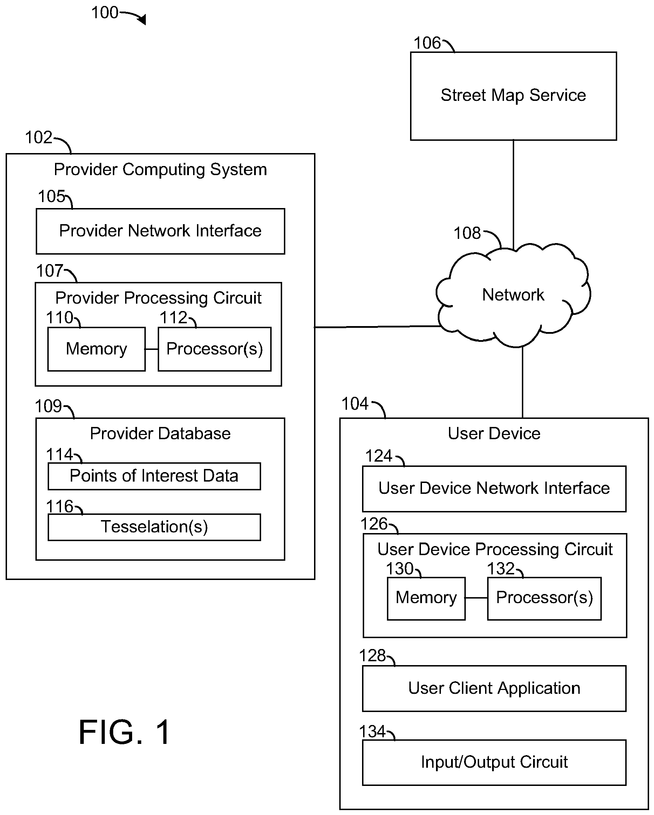

Referring now to FIG. 1, a system 100 for providing tessellation-based proximity services is shown (e.g., a tessellation-based proximity system), according to some embodiments. As shown in FIG. 1, the system 100 includes a provider computing system 102, a user device 104, and a street map service 106 communicable via a network 108. In some embodiments, any number of additional user devices 104 can be included. The network 108 can be or include the Internet, an intranet, a cellular network, a WiFi network, etc. in various embodiments. In some embodiments, the provider computing system 102 is physically remote from the user device 104 and/or the street map service 106.

The provider computing system 102 is shown as including a provider network interface 105, a provider processing circuit 107, and a provider database 109. The provider network interface 105 facilitates connection of the provider computing system 102 to the network 108. The network interface 105 can support communication via the network 108 between the user device 104 and the provider computing system 102 and/or between the street map service 106 and the provider computing system 102. The network interface 105 may include communications ports (e.g., Ethernet ports), routing capabilities, a cellular modem, a wireless transceiver or beacon, etc. in various embodiments. In some embodiments, the network interface 105 includes cryptographic capabilities to establish a secure communications session.

The provider processing circuit 107 is structured to control, at least partly, the provider computing system 102 and to execute or otherwise enable the various operations attributed herein to the processing circuit 107. For example, the provider processing circuit 107 can execute the various processes shown in the figures and described in detail below, in various embodiments. The processing circuit includes memory (one or more non-transitory computer readable media) 110 and one or more processors 112. The processor(s) 112 may be implemented as one or more general-purpose processors, application specific integrated circuits (ASICs), field programmable gate arrays (FPGAs), digital signal processors (DSPs), other suitable electronic processing components, or a combination thereof. The memory 110 may be implemented as RAM, ROM, NVRAM, Flash Memory, hard disk storage, solid state storage, etc. and may store data and/or computer-readable instructions (programming, logic, code) for providing the features described herein. The memory 110 stores computer-readable instructions that, when executed by the processor(s) 112, causes the processor(s) 112 to perform some or all of the operations attributed herein to the provider processing circuit 107 and/or provider computing system 102, in various embodiments.

The provider database 109 is structured to retrievably store (e.g., in non-transitory computer memory) data usable by the provider processing circuit 107 for providing operations as described herein. For example, the provider processing circuit 107 may be structured to read data from the provider database 109 and write data to the provider database 109. The provider database 109 can include various database components in various embodiments, for example memory in hard drive storage, disk storage, solid state storage, etc.

As shown in FIG. 1, the provider database 109 stores points of interest data 114 and one or more tessellations 116. The points of interest data 114 can include various information relating to points of interest such as hotels, vacation rentals, other accommodations, restaurants, bars, cafes, attractions (e.g., museums, monuments, shopping, scenic viewpoints, parks, event venues, etc.), among other examples. The points of interest data 114 can include the geographic location of each point of interest, for example a street address and/or geographic coordinates (e.g., GPS coordinates, latitude and longitude). The point of interest data can also include the name of each point of interest, a type of each point of interest (e.g., indicating whether the point of interest is a hotel or a museum, etc.), rating/review information (e.g., from user reviews), pricing information (e.g., rental rates, admission fees, average menu prices, etc.), hours, contact information, webpage address, and/or various other relevant information about the point of interest.

The one or more tessellations 116 stored by the provider database 109 is/are one or more cartographic tessellations, for example according to various examples described below and shown in the following figures. A tessellation stored in the provider database 109 includes tiles (cells, etc.) associated with geographic regions. The tiles tessellate (fit together without gaps or overlapping), to cover a larger geographic region, in some examples to provide global coverage. In some embodiments, tiles can be omitted in regions not of interest to users of the system 100, for example road-less regions or difficult to reach areas (e.g., polar regions, countries with restrictive access, etc.). The tessellations herein can thus be characterized as a type of map or cartographic representation.

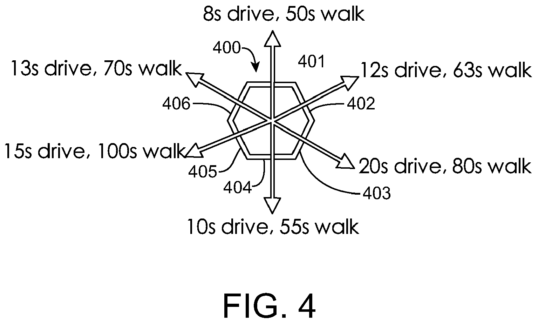

Each tile in a tessellation has multiple edges, as tiles can be triangular, rectangular, pentagonal, hexagonal, and/or other polygonal shape(s), in various embodiments. Tiles can be various sizes in different tessellations and/or within a tessellation. In the embodiments herein, each edge is associated with travel time information representing an estimated amount of time it would take to leave the tile via the edge, i.e., to get from a first tile to a second, adjacent title by crossing the edge. In some embodiments, each edge is associated with travel times for multiple transportation modalities (e.g., walking, biking, driving, electric scooter, boat, public transit, etc.). FIG. 4 illustrates an example of such titles and is described in further detail below with reference thereto. In some embodiments, separate tessellations are stored in the provider database 109 for different transportation modalities. With reference to FIG. 1, the provider database 109 may store the one or more tessellations 116 such that the provider database 109 stores coordinates of tiles and travel time information associated with edges of the tiles, in one or more transportation modalities.

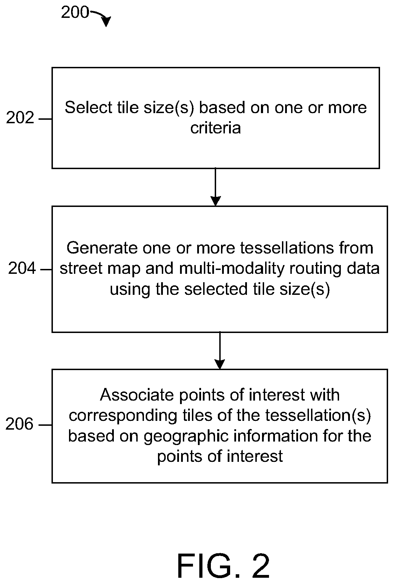

In some embodiments, the provider database 109 stores associations between the points of interest data 114 and corresponding tiles of the one or more tessellations 116 based on the geographic locations of the points of interest and the geographic regions covered by tiles. That is, the provider database 109 can store (e.g., with the tessellation(s) 116) indication that a first set of points of interest are located in a geographic region corresponding to a first tile, that a second set of points of interest are located in a geographic region corresponding to a second tile, that a third set of points of interest are located in a geographic region corresponding to a third tile, etc. Some such embodiments are described with respect to process 200 of FIG. 2, described below.

The user device 104 as shown in FIG. 1 can be a personal computing device, for example a smartphone, tablet, desktop computer, laptop computer, virtual reality headset, augmented reality headset, etc. As shown in FIG. 1, the user device 104 includes a user device network interface 124. The user device network interface 124 facilitates connection of the user device 104 to the network 108. The user device network interface 124 can support communication via the network 108 between the user device 104 and the provider computing system 102 and/or between the user device 104 and the street map service 106. The user device network interface 124 may include communications ports (e.g., Ethernet ports), routing capabilities, a cellular modem, a wireless transceiver or beacon (e.g., Bluetooth, near-field communication), etc. in various embodiments. In some embodiments, the user device network interface 124 includes cryptographic capabilities to establish a secure communications session.

The user device processing circuit 126 is structured to control, at least partly, the user device 104 and to execute or otherwise enable the various operations attributed herein to the user device 104. For example, the user device processing circuit 126 can execute the various processes shown in the figures and described in detail below, in various embodiments. The user device processing circuit 126 includes memory (one or more non-transitory computer readable media) 130 and one or more processors 132. The processor(s) 132 may be implemented as one or more general-purpose processors, application specific integrated circuits (ASICs), field programmable gate arrays (FPGAs), digital signal processors (DSPs), other suitable electronic processing components, or a combination thereof. The memory 130 may be implemented as RAM, ROM, NVRAM, Flash Memory, hard disk storage, solid state storage, etc. and may store data and/or computer-readable instructions (programming, logic, code) for providing the features described herein. The memory 130 stores computer-readable instructions that, when executed by the processor(s) 132, causes the processor(s) 112 to perform some or all of the operations attributed herein to the user device processing circuit 126 and/or user device 104, in various embodiments.

FIG. 1 shows the user device 104 as including a user client application 128. In some embodiments, the user client application 128 is provided within or by the user device processing circuit 126 (e.g., via instructions stored in memory 130 and executed by processor(s) 132). The user client application 128 can include application code, data, application programming interface(s), etc. to enable use fo the user device 104 to access and interoperate with the provider computing system 102. For example, the user client application 128 can be provided as a mobile application on the user device 104, with the mobile application dedicated to enabling features described herein. In some embodiments, the user device 104 includes a web browser which provides an alternative or additional manner for the user device 104 to interoperate with the provider computing system 102.

The user device 104 is further shown as including an input/output circuit 134. The input/output circuit 134 can include various components for providing outputs to a user of the user device 104 and receiving inputs from a user of the user device 104. For example, the input/output circuit 134 can include a display screen, a touchscreen, a mouse, a button, a keyboard, a microphone, a speaker, an accelerometer, actuators (e.g., vibration motors), including any combination thereof, in various embodiments. The input/output circuit 134 may also include circuitry/programming/etc. for running such components. The input/output circuit 134 thereby enables communications to and from a user, for example communications relating to travel times and points of interest as described in further detail elsewhere herein.

The street map service 106 is configured to provide transportation map data (e.g., street-level map data) for the system 100, for example to the provider computing system 102 via network 108. As used herein, street-level map data and similar terms are intended to refer to detailed, conventional maps and differentiate such maps from the tessellations described herein. The street map service 106 can be a free or commercial service, for example provided as a software-as-a-service option via the Internet (e.g., via network 108). Map data from the street map service 106 can be periodically updated and can include information for multiple transportation modalities (e.g., walking paths, biking paths, roads for cars, train routes, bus routes, ferry routes, etc.). In some embodiments, the street map service 106 provides travel time estimates for various roads, paths, routes, etc., for example based on speed limits, transportation timetables, historical traffic data, etc. The street map service 106 can provide calculation of turn-by-turn directions between selected points and for detailed calculations of predicted or average travel times according to such turn-by-turn directions, in some embodiments. As will be described in further detail below with reference to FIG. 2, the street map service 106 can provide sufficient underlying map, travel time, and geographic information for the provider computing system 102 to use in generating tessellations which are then used to provide the efficient processes described below. Although FIG. 1 shows one street map service 106, in some embodiments multiple street map services 106 are included. For example, multiple street map services 106 (e.g., different vendors, different data formats, different amounts of real-time traffic information, etc.) can be used by the system 100. In some embodiments, the provider computing system 102 uses a first street map service (e.g., a street map service configured for software integrations and further processing) and the user device 104 uses a second, different street map service (e.g., street map service intended for end-user/consumer use for example by including user-friendly display features). In such embodiments, the multiple street map services may substantially agree on the geographic features being represented (e.g., to the extent such services accurately reflect geographic reality), thereby avoiding conflicts between such services. In some embodiments, the user device 104 does not communicate with the street map service 106.

Referring now to FIG. 2, a flowchart of a process 200 for generating a tessellation with associations to points of interest is shown, according to some embodiments. The process 200 can be executed by the provider computing system 102 (e.g., by the provider processing circuit 107), for example using data provided by the street map service 106, in some embodiments,
At step 202, one or more tile sizes are selected for a tessellation based on one or more criteria. In some embodiments, the tiles of a tessellation will have a consistent size. In other embodiments, the tiles of a tessellation can vary within a tessellation. Smaller tile sizes may improve accuracy of travel time calculations while increasing memory requirements and computational complexity, as will be demonstrated further below, such that tuning tile size in step 202 can provide a intelligent balance between accuracy and efficiency. In some embodiments, tile size is selected in step 202 based on transportation modality as a criterion, for example such that a smaller tile size is selected for a tessellation (or portion thereof) used for (or primarily used for) walking information as compared to relative larger tile size selected for a tessellation (or portion thereof) used for (or primarily used for) driving information. As another example, tile size can be determined based on a criterion that checks whether a region is classified as urban or rural (or other such distinction), for example from underlying map data. As another example, a criterion used in step 202 can be road or path density, for example such that smaller tile sizes are selected for areas with more roads or paths as compared to areas with less roads or paths. As yet another example, a criterion used in step 202 can be point of interest density, for example such that smaller tiles can be selected in step 202 for geographic regions with larger numbers of points of interest as compared to areas with smaller numbers of (or zero) points of interest. Tile size can thus be automatically tuned in step 202 to provide higher accuracy in dense areas (e.g., highly visited areas, geographically complex areas) and higher efficiency in less-dense areas, in some embodiments.
At step 204, one or more tessellations are generated from street map and multi-modality routing data (e.g., from street map service 106) using the selected tile size(s) from step 202. Step 204 can include transforming a street-level graph encoded with travel time information (e.g., travel time along streets with a node at each intersection) into a tessellation.

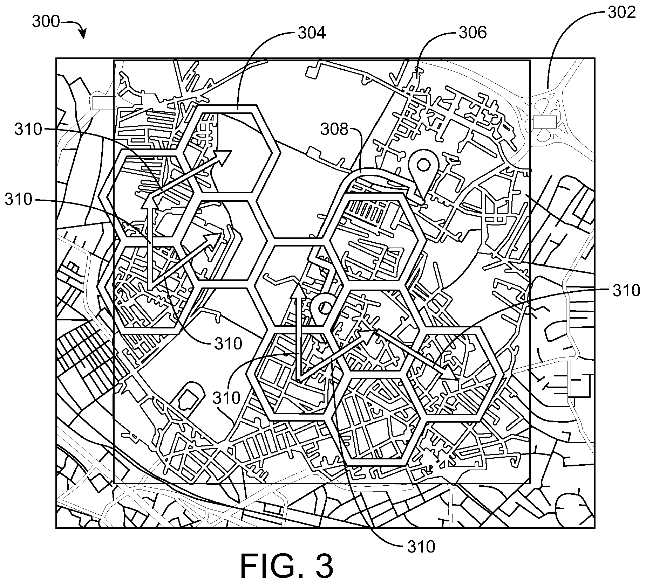

As one example facilitate understanding of step 204, FIG. 3 shows an illustration 300 which includes a street-level map 302 overlaid with a tessellation 304. The tessellation 304 is shown as including multiple tiles which fit together to cover regions of the area shown in the street-level map 302. From the street-level map, detailed turn-by-turn routing can be calculated using a route-finding algorithm, for example a detailed route 308 following streets of the street-level map 302. On the other hand, the tessellation 304 includes tiles capturing regions, with travel paths characterized at a high level as crossings from one tile into a neighboring tile (as illustrated by arrows 310).

Step 204 includes using the street-level map and routing (e.g., map 302 and routes such as 308) to estimate travel times from one tile into adjacent tiles (e.g., across all edges of the tile). Step 204 may include using the street-level map 302 and routing to find a route from an approximate midpoint of a first tile to an approximate midpoint of an adjacent tile and using the estimated time for such a route (as provided by the street-level map data) to define the travel time for the edge of the first tile shared by the adjacent tile. Where multiple roads cross an edge of a cell, the travel time may be based on the fastest route across the edge (i.e., least time), an average of the different times associated with traveling the different roads, or some other combination or function of such multiple times for crossing the edge. The travel time associated with an edge of a tile may also be defined by computing a list of cells covering a road segment (e.g., between two intersections), determining a time needed to travel the road segment (e.g., from one intersection to the other intersection) and then attaching to each edge of such cells a fraction of the time needed to travel the entire road segment. Such travel is referred to herein as crossing the shared edge, even if the street-level route does not intersect the shared edge. Travel times associated with the arrows 310 (for the edges crossed by the arrows 310) can thus be estimated using the street-level mapping data, including in multiple transportation modalities in some embodiments. Such street-level routing finding calculations can be repeated until each of the tessellation has an associated travel time determined in step 204.

Further illustrating an example result of step 204, FIG. 4 illustrates a tile 400, according to some embodiments. The tile 400 is hexagonal, having six edges shown as first edge 401, second edge 402, third edge 403, fourth edge 404, fifth edge 405, and sixth edge 406. As a result of step 204, for example, each of the edges 401-406 is associated with both a travel time for driving out of the tile 400 across the edge (i.e., into a tile which shares the edge) and a travel time for walking out of the tile 400 across the edge (i.e., into a tile which shares the edge). In the example of FIG. 4, the tile 400 is stored with travel time data indicating that leaving the tile 400 via the first edge 401 by driving would take eight seconds and by walking would take fifty seconds; leaving the tile 400 via the second edge 402 by driving would take twelve seconds and by walking would take sixty-three seconds; leaving the tile 400 via the third edge 403 by driving would take twenty seconds and by walking would take eighty seconds; leaving the tile 400 via the fourth edge 404 would take ten seconds by driving and fifty five seconds by walking; leaving the tile 400 via the fifth edge 405 would take fifteen seconds by driving and one hundred seconds by walking; and leaving the tile 400 via sixth edge 406 would take thirteen seconds by walking and seventy seconds by walking. Such values are examples and will differ for different tiles in a tessellation, different tile sizes, different underlying geographies, different transportation modalities, etc.

Step 204 can thereby reduce the complexity of the street-level map and routing data by generating a tessellation while capturing meaningful travel time information derived from detailed street-level information. The total file size of a resulting tessellation is expected to be multiple orders of magnitude smaller than the total file size of a detailed street-level map. Such savings on computer resources is apparent from FIG. 3, where the tessellation 304 is shown as having much less complexity than the underlying street graph. Thus, the tessellations resulting from step 204 provide for savings in computing and memory requirements and enable efficient execution of other processes described herein.

At step 206, points of interest are associated with corresponding tiles of the tessellation(s) based on geographic information for the points of interest. As illustrated in FIG. 3, for example, each tile encompasses a geographic region. Each point of interest (e.g., accommodation, attraction, etc. as described above) may be associated with a geographic location, such that the geographic location of any given point of interest is within the geographic region encompassed by a corresponding tile. Step 206 can use, for example, geographic coordinates of points of interest (e.g., latitude and longitude, GPS coordinates) and of tiles to find associations of the points of interest to corresponding tiles. Some tiles may be associated with multiple points of interest, while other tiles may have no points of interest. In some examples (e.g., for large points of interest such as parks, etc.), a point of interest may be associated with multiple tiles. In some embodiments, step 206 leverages street-level data and point of interest street addresses to facilitate defining associations between tiles and points of interest. In some embodiments, step 206 includes labeling each tile with associated points of interest (if any) for storage with tessellations(s) 116 in the provider database 109. In some embodiments, point of interest data 114 in the provider database is updated to indicate, for each point of interest, an identifier of the corresponding one or more tiles associated with the point of interest. Accordingly, step 204 can be characterized as simplifying detailed point of interest location information to simple tessellation-based associations, which can be leveraged for improved computation efficiency and reduced data storage, processing, and transmission demands.

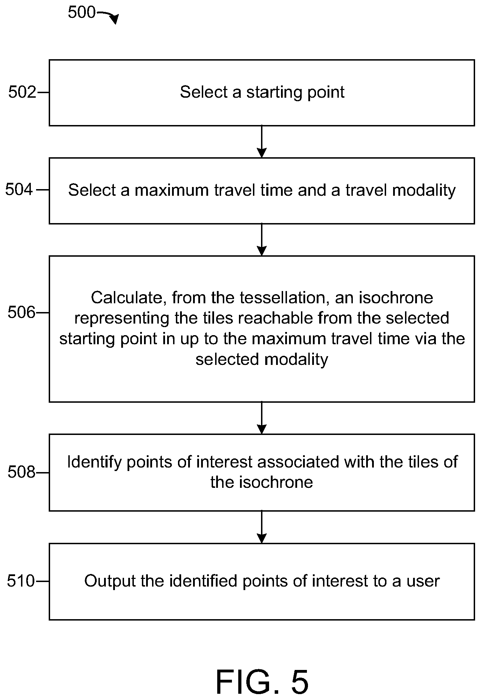

Referring now to FIG. 5, a flowchart of a process 500 for using a tessellation to identify points of interest within a maximum travel time from a selected starting point, according to some embodiments. The process 500 can be executed by the provider computing system 102 and/or by the user device 104 (e.g., in communication with the provider computing system 102). The process 500 can be executed using a tessellation and associations with points of interest output from process 200.

At step 502, a starting point is selected. In some embodiments, the starting point is a user's current location, for example determined from a global positioning system chip of the user device, using cellular network data associated with the user device, or input by a user. In some embodiments, the starting point may be based on a search query input by a user to a travelling booking site (e.g., an aggregator of hotel and/or other accommodation listings), e.g., hosted by the provider computing system 102 and/or running on user client application 128. For example, a user may be searching for points of interest (e.g., hotels) near an arbitrary location (or other point of interest, e.g., hotels near a particular event venue), which can be selected as the starting point in step 502 based on user input. The starting point is associated with a tile of the tessellation being used in process 500 such that a starting tile is selected in step 502.

At step 504, a maximum travel time and a travel modality are selected. In some embodiments, such values are user-selected, for example via graphical user interface (e.g., via drop down menus, free-text fields, selectable radio buttons, etc.). In some embodiments, the maximum travel time and travel modality are set to predefined or default values. Selectable travel modalities can include walking, biking, driving, public transit (train, bus, ferry, etc.), boat, etc. in various embodiments.

At step 506, an isochrone is calculated from the tessellation (e.g., a tessellation from process 200) based on the selected maximum travel time and travel modality. The isochrone is the set of tiles of the tessellation reachable from the selected starting tile via the selected travel modality in up to (e.g., equal to or less than) the maximum travel time. An isochrone is calculated based on the travel times stored with edges of tiles of the tessellation (e.g., times as illustrated in FIG. 4). In some embodiments, step 506 includes determining an isochrone for a time *T,* which can then be used with a filtering approach to efficiently determine isochrones for selected travel times less than *T.* For example, if a time *t* < *T* is selected, the isochrone associated with time *t* (i.e., for which *t* is the maximum travel time) can be found by filtering the set of tiles in the isochrone for *T* to remove those for which travel time is greater than *t.* In such an approach, isochrones can be quickly provided for different values of *t* (i.e., different maximum travel times) by filtering without re-performing travel time calculations (e.g., without computing more sums of travel times between tiles). The filtering approach enable quick results to be provided while saving demands on computer resources, for example in scenarios where a user is repeatedly changing the maximum travel time t in an attempt to expand or narrow a search (e.g., in a travel booking session). In some such embodiments, a time *T* can be used to run an initial isochrone generation (e.g., *T* = 1 *hour*) and then such a filtering approach can be used to provide isochrone for different maximum travel times *t* (e.g., 15 minutes, 30 minutes, etc.) which can be input by a user or otherwise selected.

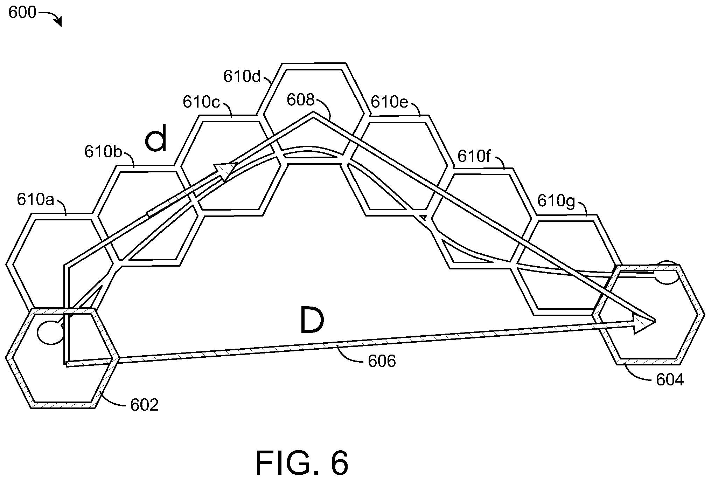

For example, FIG. 6 shows in illustration 600 of a set of tiles arranged to show a route between a starting tile 602 and a destination tile 604. A straight-line distance D between the starting tile 602 and the destination tile 604 is represented by arrow 606. One possible path from the starting tile 602 to the destination tile 604 is shown by line 608 which passes through edges and center-points of a series of tiles (shown as intermediate tiles 610a-g). The line 608 is illustrated as taken a distance *d* to reach the destination tile 604. The total travel time for the line 608 from the starting tile 602 to the destination tile 604 can be calculated as the sum of the travel times associated with all of the edges crossed by the line 608, i.e., an edge of each of the starting tile 602 and the intermediate tiles 610a-g (eight edges total). The total travel time can thus be estimated for reaching the destination tile 604 from the starting tile 602 via the route represented by line 608. In the context of FIG. 5, the intermediate tiles 610a-g and the destination tile 604 are including in the isochrone if the total travel time (i.e., the result of the sums) is less than the maximum travel time.

Based on such logic, an isochrone can be found in step 506 using a flood-fill approach, whereby each subsequent tile is selected for inclusion in the isochrone unless moving into that tile would reach a total travel time exceeding the maximum travel time from step 504.

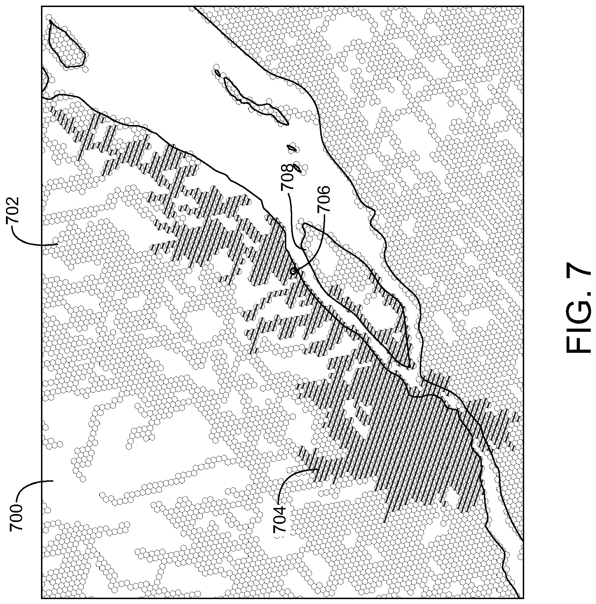

An example isochrone resulting from an example implementation of step 506 is shown in FIG. 7, according to some embodiments. FIG. 7 shows a map 700 overlaid with a tessellation 702. As shown in FIG. 7, the tessellation 702 covers geographic areas where roads and/or other transportation pathways are available, while not covering other areas (e.g., nature reserves, rivers, etc.) where transportation is impractical (thereby saving memory requirements relative to the complete map 700). FIG. 7 further illustrates an isochrone 704 associated with a starting tile 706 and includes the tiles of the tessellation 702 estimated to be reachable from the starting tile 706 in less than (or equal to, in some embodiments) the selected maximum travel time.

The example of FIG. 7 illustrates practical advantages of the isochrone approach as compared to other proximity measures such as straight-line distances between points. The geography represented in FIG. 7 includes a river, with the starting tile 706 located near one bank of the river. Although points across the river (e.g., a point 708 on an island) is physically close if measured from geographic coordinates, the point 708 is not encompassed by the isochrone 704 because travelling to the point 708 would take more than the maximum travel time (because, in this example, the only bridge is not conveniently located for travel to the point 708 form the starting tile 706). For a travelers practical purposes, it would be impractical or misleading to indicate that the point 708 is nearby the starting tile 706 (e.g., a person might not want to stay at a hotel at point 708 if they are traveling to attend an event occurring in the starting tile 706). Such a traveler may be more interest in knowing that locations which are relatively far away (in straight-line distance) are relatively accessible in terms of estimated travel time. The approach herein whereby tessellations are generated from street-level data enables such practical considerations to be captured while still reducing computational complexity.

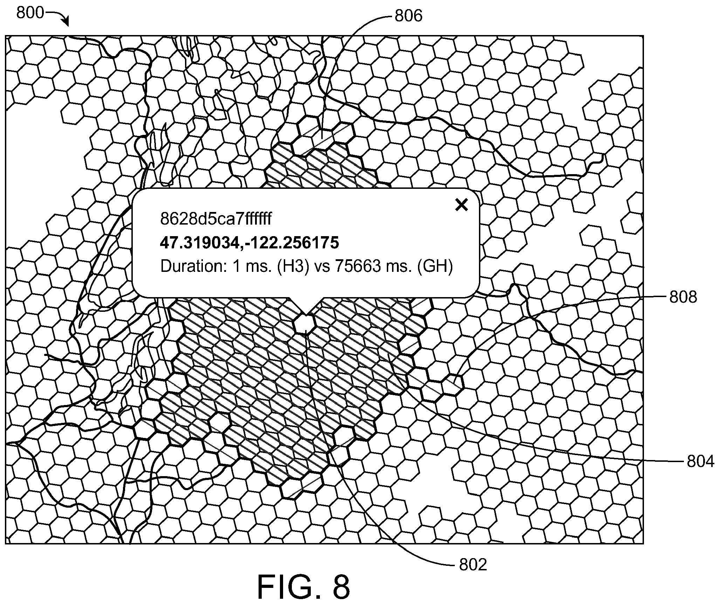

Further illustrating advantages of process 500 through at least step 506, FIG. 8 shows an illustration 800 comparing generation of an isochrone using the tessellation approach of process 500 to generation of an isochrone using street-level route-finding algorithms, according to some example embodiments and experimental results. In the example shown, the same starting location 802 is used to generate isochrones using both such approaches. Overlapping isochrone cells are illustrated as cells 804, with several cells 806 included only in the street-level route-finding isochrone and several cells 808 including only in the tessellation-based isochrone. The illustration 800 thereby demonstrates that the results of such approaches substantially agree, i.e., find substantially the same area as being reachable in less than a selected maximum travel time. Illustration 800 further includes experimental computation time information, in particular indicating that an experiment took one microsecond to calculate the tessellation-based isochrone (e.g., using step 506) but took over 75000 times longer (e.g., over 75 seconds) to calculate the isochrone using street-level route finding techniques. FIG. 8 thus provides experimental evidence showing the superior efficiency of the approaches used herein for finding isochrones, i.e., for finding areas reachable from a selected starting location in less than a selected maximum amount of time.

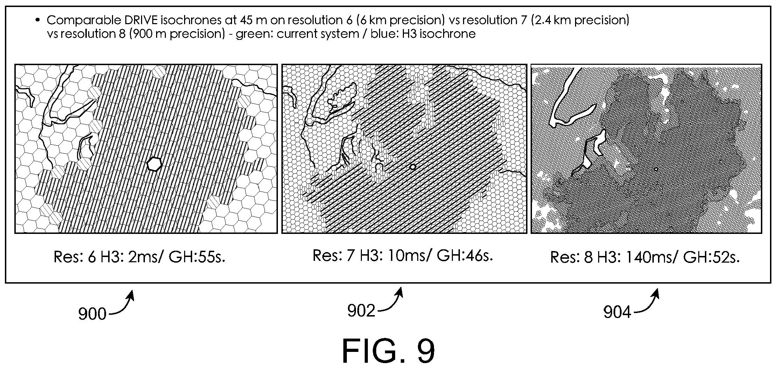

FIG. 9 provides similar results, including for tessellations of different tile sizes and for different locations, according to some embodiments. FIG. 9 includes a first illustration 900 illustrating that for a relative large tile sizes (dimension of 6 kilometers), an isochrone for forty-five minute drive times took two microseconds to find using the tessellation approach herein and fifty-five seconds to calculate using a street-level routing algorithm. FIG. 9 also includes a second illustration 902 illustrating that for a medium tile size (dimension of 2.4 kilometers), an isochrone for forty-five minute drive times took ten milliseconds to find using the tessellation approach herein and forty-six seconds to calculate using a street-level routing algorithm. FIG. 9 also includes a third illustration 904 illustrating that for even a relatively-small tile size (dimension of 900 meters), the tessellation approach is still several order of magnitude more efficient (shown as one hundred forty micro-seconds for the tessellation approach and fifty-two seconds for the street-level routing algorithm). FIGS. 8-9 thereby illustrate savings and improvements in computational efficiency provided by the teachings herein, for example provided in step 506.

Still referring to FIG. 5 and process 500, at step 508 the isochrone from step 506 is used to identify points of interest associated with the tiles of the isochrone. Step 508 can use an outcome of step 206 of process 200, for example, and/or data stored in the provider database 109. By using stored associations, step 508 can efficiently aggregate (e.g., from data stored with the tiles of the isochrone) a list of points of interest located within the isochrone. Step 508 is thereby substantially more computationally efficient than other approaches, for example compared to an approach of individually calculating turn-by-turn directions to all points of interest to assess their proximity to a starting point.

At step 510, the identified points of interest are output to a user, for example via the input/output circuit 134 of the user device 104. The identified points of interest can be presented in a list or in some other format in a graphical user interface, in some embodiments. In some embodiments, the points of interest are communicated audibly (e.g., via speaker) to the user. In some embodiments, presenting the identified points of interest to a user in step 508 can include presenting one or more selectable options to a user to book a reservation, ticket, rental, stay, activity, etc. to enable the user to book experiences, accommodations, etc. associated with the points of interests. Various additional point of information can be accessed from the points of interest data 114 of the provider data and presented in step 508 (e.g., hours, ratings, reviews, prices, etc.).

Due to the computational efficiencies highlighted above, such points of interest results can be output to a user in an amount of time that the user perceives as substantially instantaneous (e.g., comparable to typical webpage load times, on the order of microseconds). In contrast, using other approaches such as those which involve street-level routing finding would generate results on the order of seconds or minutes, based on experimental results of FIGS. 8-9 (or require significantly more computing power), which is undesirable and/or impractical for modern travel searching, mapping, and booking technologies. The technical innovations herein thus enable results which may not be technically feasible using conventional approaches, without losing important contextual travel-time information (e.g., as highlighted in discussion of FIG. 7 above).

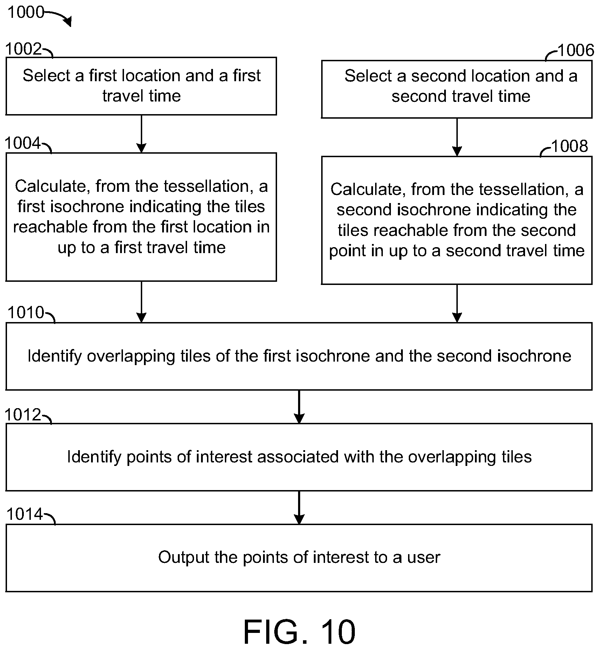

Referring now to FIG. 10, a flowchart of a process 1000 for identifying points of interest within desired travel times of separate locations is shown, according to some embodiments. The process 1000 can be executed by the system 100, for example by the provider computing system 102 and/or the user device 104. The process 1000 can use outputs of process 200, for example, and can use various features and advantages described with reference to process 500, for example.

At step 1002, a first location and a first travel time are selected. The first location can be selected based on a user input (e.g., a location selected via a graphical user interface) or other information (e.g., as described with reference to step 502 of process 500). The first travel time can be a maximum desired travel time, e.g., input by a user or otherwise selected with reference to step 504 of process 500. A first desired travel modality may also be selected in step 1002 (e.g., based on user input to a graphical user interface)

At step 1004, a tessellation (e.g., from process 200) is used to calculate a first isochrone indicating the tiles of the tessellation reachable from the first location in up to the first travel time (e.g., in the first desired travel modality). Step 1004 can be executed according to the approach described above with reference to step 506. A first set of tiles is thereby identified. In some embodiments, step 1004 is repeated for multiple different travel modalities to determine a first set of isochrones in step 1004.

At step 1006, a second location and a second travel time are selected. The second location can be selected based on a user input (e.g., a location selected via a graphical user interface) or other information (e.g., as described with reference to step 502 of process 500). The second travel time can be a maximum desired travel time, e.g., input by a user or otherwise selected with reference to step 504 of process 500. The second location can be different than the first location and the second travel time can be different than the first travel time. In some embodiments, different travel modalities are also selected from the first location and the second location. A second desired travel modality may also be selected in step 1002 (e.g., based on user input to a graphical user interface).

At step 1008, a tessellation (e.g., the tessellation used in step 1004) is used to calculate a second isochrone indicating the tiles of the tessellation reachable from the second location in up to the second travel time. Step 1008 can be executed according to the approach described above with reference to step 506. A second set of tiles is thereby identified. In some embodiments, step 1008 is repeated for multiple different travel modalities to determine a second set of isochrones in step 1008.

At step 1010, overlapping tiles of the first isochrone (from step 1004) and the second isochrone (from step 1008) are identified. Tiles of the tessellation which are in both the first isochrone and the second isochrone are the overlapping tiles. If no overlap exists, an error message can be communicated to a user (e.g., via user device 104). If overlapping tiles exist, process 1000 can continue to step 1012. In other embodiments, any number of additional locations and associated isochrones can be selected such that the overlapping tiles identified in step 1010 represent the overlap of any desired number of isochrones. In some embodiments, step 1010 includes handling multiple transportation modalities by determining overlapping tiles of a first set of isochrones (produced in embodiments where step 1004 is repeated for multiple travel modalities) and a second set of isochrones (produced in embodiments where step 1008 is repeated for multiple travel modalities).

At step 1012, points of interest associated with the overlapping tiles are identified. Step 1012 can be executed according to the features of step 508 described above, for example, based on the set of overlapping tiles. The identified points of interest will thus be estimated to be both (1) reachable from the first location in up to the first travel time and (2) reachable from the second location in up to the second travel time. Process 1000 thereby further leverages geometric overlap of tiles in isochrones in a manner which compounds the efficiency advantages described with respect to FIGS. 5-9.

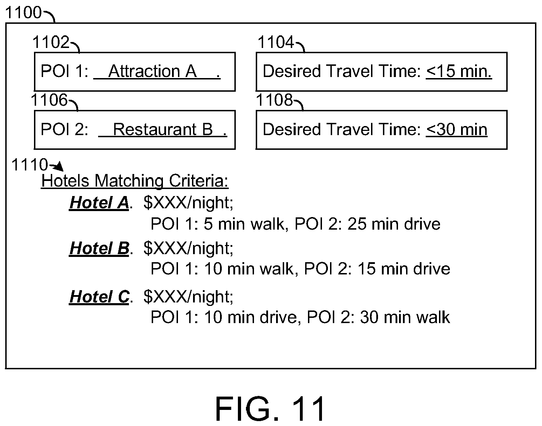

At step 1014, the points of interest are output to the user (e.g., via user device 104). Step 1014 can be adapted from step 510 of process 500, for example. In some embodiments, step 1014 includes generating a graphical user interface, for example as illustrated in FIG. 11.

Referring now to FIG. 11, a graphical user interface 1100 that can be presented to a user to accept inputs to and present results of process 1000 of FIG. 10 is shown, according to some embodiments. The graphical user interface 1100 can be presented by input/output circuitry 134 of the user device, for example. In the example shown, the user is enabled to search for hotels within desired travel times from two locations. Other points of interest can be similarly searched for in various embodiments.

The graphical user interface 1100 is shown as including a first point of interest input field 1102 and a first desired travel time field 1104 which enable a user to input a first location and a first travel time, respectively (e.g., via drop down menus, searchable lists, suggested values, free-text entry, etc.). Such inputs can be used in step 1002. The graphical user interface 1100 is shown as also including a second point of interest input field 1106 and a second desired travel time field 1108 which enable a user to input a second location and a first travel time, respectively (e.g., via drop down menus, searchable lists, suggested values, free-text entry, etc.). Such inputs can be used in step 1006.

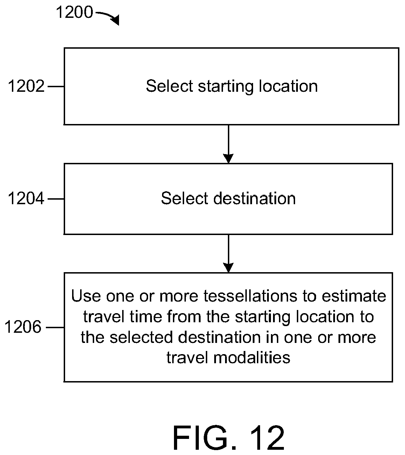

The graphical user interface 1100 further includes a results list 1110 showing hotels matching the search criteria, for example hotels identified in step 1012 of process 1000. In the example shown, the hotels are listed in the results list 1110 as hyperlinks to further information about the hotels and with pricing information for the hotels. The results list 1110 further shows estimated travel times to the different hotels (e.g., generated according to process 1200 of FIG. 12 described below). Various such information can be omitted in various embodiments, and various other relevant information can be shared.

In the example shown, the graphical user interface 1100 (and the processes described herein used to provide the displayed information) enables a user to efficiently search for properties which met detailed travel time criteria without requiring the user to independently search for turn-by-turn directions and while avoiding reachability issues. The computational efficiencies enabled by the processes herein make such a graphical user interface 1100 feasible to be provided with user-acceptable responsiveness, overcoming prior technical roadblocks.

Referring now to FIG. 12, a process 1200 for estimating travel times between a starting location and a destination using a tessellation is shown, according to some embodiments. The process 1200 can be executed by the provider computing system 102 and/or the user device 104, in some embodiments. The process 1200 can use one or more tessellations output from process 200, for example.

At step 1202, a starting location is selected. The starting location a selected point of interest or an arbitrary location, for example input by a user or determined automatically from a current position of the user device 104. In some embodiments, the starting location is a hotel or vacation rental property (or other point of interest) selected by a user in a travel booking session provided via a webpage or mobile application (e.g., via user client application 128). At step 1204, a destination is selected. The destination may be user-input, a selected point of interest or an arbitrary location, for example input by a user. In some embodiments, the destination is a hotel or vacation rental property (or other point of interest) selected by a user in a travel booking session provided via a webpage or mobile application (e.g., via user client application 128).

At step 1206, one or more tessellations are used to estimate travel time from the starting location to the selected destination in one or more modalities. In some embodiments, a different tessellation is used for each different transportation modality. In some embodiments, different tessellations are used and results averaged or otherwise combined, for example different tessellations having different tile sizes or shapes, trained on different traffic data (e.g., different times of day), or otherwise differing from one another. As one example, the one or more tessellations may include a first tessellation having a first tile size and a second tessellation having a second tile size, and using the one or more tessellations can include selecting between the first tessellation and the second tessellation for use based on a desired accuracy for a result of estimating total travel times. In such an example, the desired accuracy can be based on a mode of travel (e.g., higher accuracy desired for walking as compared to driving), a user selection (e.g., a toggle on a graphical user interface to allow a user to elect either higher speed results or higher accuracy results), or other consideration (e.g., whether the area between the first tile and the second tile corresponds to an urban area or a rural area).

Estimating travel time from the starting location to the selected destination using a tessellation can include finding the chain of tiles from the starting location to the selected destination which minimizes a total travel time (i.e., minimizes a sum of the travel times associated with edges crossed to reach the destination through multiple tiles). Various path planning algorithms can be used for finding such an optimal route through the tessellation. Because the tessellation is less complex than street-level detail such route finding processes can execute substantially faster than conventional mapping programs can find turn-by-turn directions. The approach of process 1200 can be helpful for quickly providing approximate travel times and in scenarios where detailed directions are not desired.

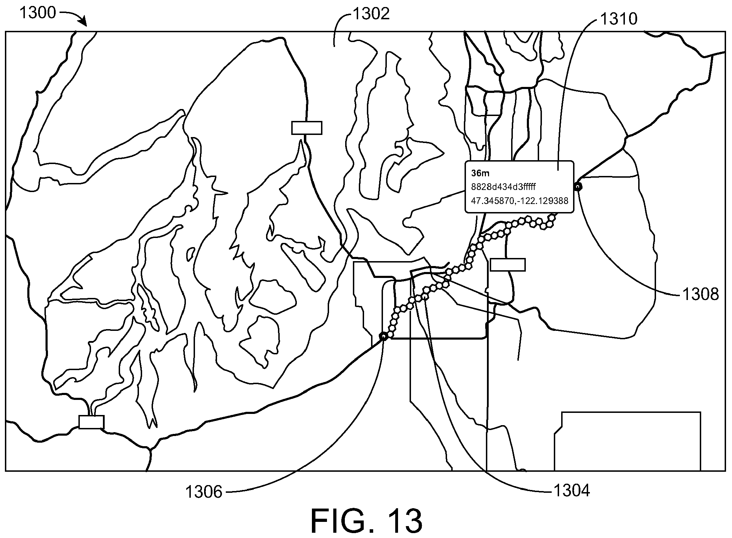

Step 1206 can thereby result in an estimation of travel time from a starting location to a destination in one or more travel modalities (e.g., a time for biking, a time for walking, a time for driving, etc.). In some embodiments, a visualization of the determined route is also generated in process 1200 and output to a user (e.g., via input/output circuit 134). An example graphical user interface 1300 generated in such an embodiments is shown in FIG. 13, according to some embodiments. Referring now to FIG. 13, the graphical user interface 1300 shows a map 1302 (e.g., a street map) overlaid with a chain of tiles 1304 which extends from a starting point 1306 to a destination 1308. The destination 1308 is selected at a position of the user's cursor in the example shown. The graphical user interface 1300 further includes a window 1310 which shows the estimated travel time to the destination 1308 from the starting point 1306. A new search, path, and time estimation can be quickly created, in some embodiments, by the user clicking on another location on the map 1302 to select a new destination. Computationally-efficient route and travel time estimations can thus be quickly requested, generated, and presented.

In some embodiments, travel time(s) in one or more transportation modalities calculated in process 1200 are provided to user in a graphical user interface of a travel booking session. In such embodiments, one or both of the starting point and the destination may be a hotel, vacation rental, or other point of interest with a bookable (e.g., able to be reserved, tickets available, rooms available, etc.) experience. Process 1200 can include providing, via such a travel booking session, a selectable option for a user to complete a booking of a hotel, vacation rental, etc. associated with the starting point and/or destination. The efficient calculations of process 1200 can thereby enable low latency searching and browsing of accommodations and other travel locations in a travel booking session, enable user-friendly and computationally efficient travel bookings.

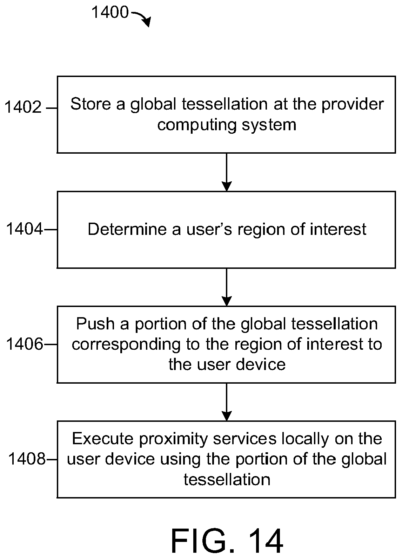

Referring now to FIG. 14, a flowchart of a process 1400 for providing tessellation-based proximity services locally on a user device is shown, according to some embodiments. The process 1400 can be executed by the system 100, for example using outputs of process 200 and/or executing various other processes herein, in various embodiments.

At step 1402, a global tessellation is stored at the provider computing system 102 (e.g., in provider database 109). The global tessellation may cover the entire globe (i.e., the whole, spherical world) or may be global in that all areas of potential interest are covered by the tessellation. In some embodiments, such a tessellation may take up an amount of computer storage suitable for the provider database 109 but not desirable for smaller devices such as the user device 104 in an embodiment. For example, a user may not want to consume storage space on the user's personal device to store data for regions of the world the user is not intending to visit.

At step 1404, a user's region of interest is determined. In some embodiments, the region of interest is determined by based on the user's current location (e.g., from user device data). In some embodiments, the region of interest is based on a user search query or other user input selecting a region of interest. In some embodiments, the region of interest is based on a travel booking, for example a flight booking, hotel booking, etc., or search history for such bookings.

At step 1406, a portion of the global tessellation corresponding to the region of interest is pushed to the user device 104, for example to the user client application 128. The portion (e.g., sub-tessellation) for the region of interest can thus be stored locally on the user device 104 and accessed on the user device 104, including in times when the user device 104 loses connection to the network 108.

At step 1408, proximity services are executed locally on the user device 104 using the portion of the global tessellation pushed to the user device 104 in step 1406. The proximity services executed in step 1408 can be any of the various features, processes, etc. described with reference to FIGS. 5-13, for example. Process 1400 enables such processes to be executed locally on the user device 104. Further, the computational efficiencies described in detail about with respect to FIGS. 5-13 further enable mobile deployment by reducing computation demands on the user device (e.g., allowing use on mobile phones, etc. with relatively limited computing power), reducing electricity consumption to run the processes described herein (which may be increasingly important locally on battery-powered user devices), etc. Various such advantages are enabled by the teachings herein.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

## Claims

1. One or more non-transitory computer-readable media storing program instructions that, when executed by one or more processors, cause the one or more processors to perform operations comprising:
providing a tessellation comprising a plurality of tiles corresponding to a plurality of geographical regions, each of the plurality of tiles comprising a plurality of edges and provided with data indicating travel times across the plurality of edges;
associating a plurality of points of interest with corresponding tiles of the plurality of tiles based on locations of the plurality of points of interests relative to the plurality of geographic regions;
selecting a first tile of the plurality of tiles;
determining, using the tessellation and based on the travel times across the plurality of edges, a first set of the plurality of tiles reachable from the first tile in up to a first total travel time; and
identifying a first set of the plurality of points of interest associated with the first set of the plurality of tiles.

2. The one or more non-transitory computer-readable media of Claim 1, wherein the operations further comprise:
selecting a second tile of the plurality of tiles;
determining, using the tessellation and based on the travel times across the plurality of edges, a second set of the plurality of tiles reachable from the second tile in up to a second total travel time;
determining overlapping tiles included in both the first set of the plurality of tiles and the second set of the plurality of tiles; and
identifying a second set of the plurality of points of interest associated with the overlapping tiles.

3. The one or more non-transitory computer-readable media of Claim 1 or Claim 2, wherein the operations further comprise generating a graphical user interface comprising a visualization of the first set of the plurality of points of interest; wherein optionally
the operations further comprise estimating travel times to the first set of the plurality of points of interests from the first tile and providing the travel times in the graphical user interface.

4. The one or more non-transitory computer-readable media of any preceding Claim, wherein the travel times comprise first travel times for a first transportation modality across the plurality of edges and second travel times for a second transportation modality across the plurality of edges.

5. The one or more non-transitory computer-readable media of any preceding Claim, wherein the operations further comprise generating the tessellation from street-level mapping data.

6. The one or more non-transitory computer-readable media of any preceding Claim, wherein the operations further comprise generating the tessellation, wherein generating the tessellation comprises selecting sizes of the plurality of tiles based on point of interest density or road density; and/or
wherein selecting the first tile of the plurality of tiles comprises determining that a user-selected location is within a first geographic region of the plurality of geographic regions, the first geographic region associated with the first tile.

7. The one or more non-transitory computer-readable media of any preceding Claim,
wherein:
the first tile comprises a first edge and a second edge;
the first edge is associated with a first travel time corresponding to leaving the first tile across the first edge using a first transportation modality;
the second edge is associated with a second travel time corresponding to leaving the first tile across the second edge using the first transportation modality;
the first edge is associated with a third travel time corresponding to leaving the first tile across the first edge using a second transportation modality; and
the second edge is associated with a fourth travel time corresponding to leaving the first tile across the second edge using the second transportation modality.

8. A method, comprising:
storing, in computer memory, a tessellation comprising a plurality of tiles corresponding to a plurality of geographical regions, the plurality of tiles stored with travel times in a plurality of transportation modalities across a plurality of edges of the plurality of tiles;
storing, in the computer memory, associations between a plurality of points of interest and corresponding tiles of the plurality of tiles based on locations of the plurality of points of interests relative to the plurality of geographic regions;
determining, by one or more processors, a first set of the plurality of tiles reachable from a first tile of the plurality of tiles in up to a first total travel time in a selected modality of the plurality of transportation modalities based on the travel times across the plurality of edges in the selected modality; and
identifying, by the one or more processors, a first set of the plurality of points of interest associated with the first set of the plurality of tiles.

9. The method of Claim 8, further comprising:
determining a subset of the plurality of geographical regions of relevance to a particular user; and
pushing, from the computer memory to a user device remote from the computer memory, a subset of the plurality of tiles corresponding to the subset of the plurality geographical regions and a subset of the associations corresponding to the subset of the plurality of tiles.

10. The method of Claim 9, wherein the user device comprises the one or more processors such that the method comprises executing the determining and the identifying locally on the user device.

11. The method of any of Claims 8 to 10, further comprising:
determining, using the tessellation and based on the travel times across the plurality of edges, a second set of the plurality of tiles reachable from a second tile in up to a second total travel time;
determining overlapping tiles included in both the first set of the plurality of tiles and the second set of the plurality of tiles; and
identifying a second set of the plurality of points of interest associated with the overlapping tiles; and/or
the method further comprising generating a graphical user interface comprising a visualization of the first set of the plurality of points of interest.

12. The method of any of Claims 8 to 11, further comprising selecting the first tile based on a user-input location such that the user-input location is geographically within the first tile; and/or.
the method further comprising receiving a selection of the first total travel time from a user.

13. The method of any of Claims 8 to 12, wherein:
the first tile comprises a first edge and a second edge;
the first edge is associated with a first travel time corresponding to leaving the first tile across the first edge using a first transportation modality;
the second edge is associated with a second travel time corresponding to leaving the first tile across the second edge using the first transportation modality;
the first edge is associated with a third travel time corresponding to leaving the first tile across the first edge using a second transportation modality; and
the second edge is associated with a fourth travel time corresponding to leaving the first tile across the second edge using the second transportation modality.

14. One or more non-transitory computer-readable media storing program instructions that, when executed by one or more processors, cause the one or more processors to perform operations comprising:
providing one or more tessellations comprising a plurality of tiles corresponding to a plurality of geographical regions, the plurality of tiles comprising a plurality of edges provided with data indicating travel times for crossing the plurality of edges via a plurality of transportation modalities;
selecting a first tile corresponding to a starting location within the plurality of geographic regions and a second tile corresponding to a destination within the plurality of geographic regions; and
estimating total travel times in the plurality of transportation modalities from the first tile to the second tile using the one or more tessellations, wherein estimating the total travel times comprises summing the travel times for crossing one or more subsets of the plurality of edges via the plurality of transportation modalities, wherein the one or more subsets of the plurality of edges provide one or more routes through the one or more tessellations from the first tile to the second tile.

15. The one or more non-transitory computer-readable media of Claim 14, wherein the one or more tessellations comprise a first tessellation having a first tile size and a second tessellation having a second tile size, wherein using the one or more tessellations comprises selecting between the first tessellation and the second tessellation for use based on a desired accuracy for a result of estimating the total travel times; and or
wherein:
selecting the first tile and the second tile comprises providing a travel booking session to a user and receive a user search query for a travel accommodation via the travel booking session;
the starting location or the destination corresponds to a hotel or vacation rental property; and
the operations further comprise providing, via the travel booking session, an indication of the total travel times in the plurality of transportation modalities and a selectable option to complete a booking of the hotel or vacation rental property.
